# EUROPÄISCHE PATENTSCHRIFT

(11) **EP 1 721 151 B1**
(45) Veröffentlichungstag und Bekanntmachung des Hinweises auf die Patenterteilung: **16.03.2011**
(21) Anmeldenummer: 05714924.7
(22) Anmeldetag: 28.01.2005
(51) Int. Cl.: G01N 29/11

(54) **VERFAHREN ZUR ZERSTÖRUNGSFREIEN FEHLERDIAGNOSE AN VERBUNDBAUTEILEN MIT EINEM KERN AUS EINEM METALL- ODER KERAMIKSCHAUM**
METHOD FOR NON-DESTRUCTIVE FLAW DIAGNOSIS IN COMPOSITE COMPONENTS PROVIDED WITH A METALLIC OR CERAMIC FOAM CORE
PROCEDE POUR DIAGNOSTIQUER NONDESTRUCTIVEMENT DES DEFAUTS DANS DES ELEMENTS COMPOSITES COMPORTANT UN NOYAU EN MOUSSE METALLIQUE OU CERAMIQUE

(30) Priorität: 27.02.2004 DE 102004011566
(43) Veröffentlichungstag der Anmeldung: 15.11.2006
(73) Patentinhaber: Fraunhofer-Gesellschaft zur Förderung der angewandten Forschung e.V., 80686 München (DE)
(72) Erfinder: KÖHLER, Bernd, 01259 Dresden (DE); BAUMBACH, Gerd, Tilo, 76199 Karlsruhe (DE); MYAGOTIN, Anton, 680014 Chabarowsk (RU)
(74) Vertreter: Pfenning, Meinig & Partner GbR
(86) Internationale Anmeldenummer: PCT/DE2005/000171
(87) Internationale Veröffentlichungsnummer: WO 2005/083420

(56) Entgegenhaltungen:
- DE-A1- 19 810 092
- PATENT ABSTRACTS OF JAPAN Bd. 2000, Nr. 10, 17. November 2000 (2000-11-17) -& JP 2000 187024 A (MITSUBISHI KAGAKU FORM PLASTIC KK; TOTSUKA DENSHI KEISOKU KENKYUSHO:KK), 4. Juli 2000 (2000-07-04)
- LU T J ET AL: "Sound absorption in metallic foams" JOURNAL OF APPLIED PHYSICS, AMERICAN INSTITUTE OF PHYSICS. NEW YORK, US, Bd. 85, Nr. 11, 1. Juni 1999 (1999-06-01), Seiten 7528-7539, XP012046374 ISSN: 0021-8979
- JI Q ET AL: "Ultrasonic wave propagation in water-saturated aluminum foams" ULTRASONICS, IPC SCIENCE AND TECHNOLOGY PRESS LTD. GUILDFORD, GB, Bd. 36, Nr. 6, April 1998 (1998-04), Seiten 759-765, XP004119459 ISSN: 0041-624X

## Beschreibung

Die Erfindung betrifft ein Verfahren zur zerstörungfreien Fehlerdiagnose an Verbundbauteilen mit einem Kern aus einem Metall- oder Keramikschaum. Dabei ist ein solcher Schaumkern an mindestens zwei gegenüberliegenden Seiten mit Elementen eingefasst, die mit dem Schaumkern das Verbundbauteil bilden. Üblicherweise sind dabei die Schaumkerne und die Elemente auch stoffschlüssig miteinander verbunden, wobei die Herstellung solcher Verbindungen in vielen Fällen technologisch vorteilhaft auch in einem Schritt bei der Herstellung von Verbundbauteilen erfolgen kann, bei dem auch die Ausbildung der jeweiligen Schaumstruktur erfolgt. Dies ist beispielsweise bei Verbundbauelementen mit einem Aluminiumschaumkern möglich.

Das erfindungsgemäße Verfahren kann für die Erkennung unterschiedlicher bei der Herstellung gegebenenfalls vorkommender Fehlerarten eingesetzt werden, wobei die jeweiligen Fehler von außen anderweitig nicht oder nur sehr schwer detektiert bzw. erkannt werden können. So besteht die Möglichkeit Inhomogenitäten der ausgebildeten Schaumstruktur, zu große Poren, eine geringe Porosität aber auch fehlerhafte Verbindungsstellen der stoffschlüssigen Verbindung zwischen Schaumkörper und den mit diesen verbundenen Elementen detektieren und lokalisieren zu können.

So ist es für viele Anwendungen bei der zerstörungsfreien Werkstoffprüfung üblich Röntgentechnik einzusetzen. Hierbei können aber nicht alle möglichen Fehlerarten und hier insbesondere Ablösungen oder Fehler der stoffschlüssigen Verbindung zwischen Schaumkern und einem Element detektiert werden. Außerdem sind erhöhte Sicherheitsanforderungen bezüglich des Strahlenschutzes zu beachten.

Aus Patent Abstracts of Japan Bd. 2000, Nr. 10, 17. November 2000 ist in JP 2000 187024 A eine Vorrichtung zur zerstörungsfreien Prüfung von Kompositen mit Schaum beschrieben. Dabei werden Horizontalwellen durch einen Schaum zu einem Detektor-geführt und dabei eine Fehlerdetektion durchgeführt.

T. J. Lu u.a. wird in "Sound absorption in metallic foams"; Journal of Applied Physics; New York; US; Bd. 85 ; Nr. 11; 01. Juni 1999; Seiten 7528 bis 7539; XP012046374 ISSN:0021-8979 auf Untersuchungen zur Schallabsorption in metallischen Schäumen hingewiesen.

Es ist daher Aufgabe der Erfindung eine Lösung vorzuschlagen, mit der eine zerstörungsfreie Fehlerdiagnose an Verbundbauteilen mit einem Kern aus einem Keramik- oder Metallschaum durchgeführt werden kann, bei der mit hoher Sicherheit Fehler detektiert werden können.

Erfindungsgemäß wird diese Aufgaben mit den im Anspruch 1 bezeichneten Merkmalen gelöst. Vorteilhafte Ausgestaltungsformen und Weiterbildungen der Erfindung können mit den in den untergeordneten Ansprüchen enthaltenen Merkmalen gelöst werden.

Bei der erfindungsgemäßen Lösung wird auf bei der zerstörungsfreien Fehlerdiagnose ebenfalls häufig eingesetzte Ultraschallwellentechnik zurückgegriffen. Dabei konnte aber nicht ohne weiteres erwartet werden, dass die geltenden Prinzipien auch bei Keramik- oder Metallschaumstrukturen angewendet werden können, da diese nicht nur mechanisch, sondern auch akustisch ein erhebliches heterogenes Verhalten zeigen. Dementsprechend können die an homogenen Werkstoffen möglichen Effekte bei Schaumstrukturen nicht ausgenutzt werden. So weisen übliche Werkstoffe nahezu konstante Schallgeschwindigkeiten auf und in solche Werkstoffe/Werkstücke eingekoppelte Ultraschallwellen durchdringen diese mit der entsprechenden Schallgeschwindigkeit. An Grenz- bzw. Oberflächen solcher Werkstoffe/Werkstücke treten Beugungen und Reflexionen von Ultraschallwellen auf, wobei insbesondere zurückreflektierte Ultraschallwellen für eine Fehlerdetektion genutzt werden. So können mit den herkömmlichen Lösungen beispielsweise in Gusswerkstücken vorhandene Lunker ohne weiteres detektiert werden.

Schaumstrukturen bei den in Rede stehenden metallischen oder keramischen Werkstoffen weisen aber eine hohe Anzahl von Poren auf, die quasi eine lediglich durch Verbindungsstege voneinander getrennte dreidimensionale Lunkeranordnung bilden, so dass in Schallausbreitungsrichtung mehrere Poren nacheinander angeordnet sind, die einer kontinuierlichen Ausbreitung der eingekoppelten Ultraschallwellen entgegenstehen.

Die Keramik- oder Metallschäume weisen ein entsprechend undefiniertes Übertragungsverhalten von Schallwellen in Verbindung mit einer hohen Dämpfung auf, so dass ein geeigneter Lösungseinsatz für eine erfindungsgemäße Fehlerdiagnose unter Einsatz von Ultraschallwellen nicht zu erwarten war.
Überraschenderweise hat sich aber herausgestellt, dass eine zerstörungsfreie Fehlerdiagnose an Verbundbauteilen der in Rede stehenden Art möglich ist, wenn mit mindestens einem auf eine äußere Oberfläche eines der mit dem Schaumkern verbundenen Elemente aufgesetzten Aktuators Ultraschallwellen in das Verbundbauteil eingekoppelt werden. Dabei können mit einem akustischen Detektor, der auf der gegenüberliegenden Seite des Kernes angeordneten Oberfläche des jeweils anderen Elementes aufgesetzt ist, Ultraschallwellen-Messsignale detektiert werden. Dabei sollen der Aktuator und der diesem zugeordnete akustische Detektor in einem vorgegebenen Abstand zueinander angeordnet sein, wobei dies bevorzugt auf einer gemeinsamen Achse erfolgen sollte.

Für den Fall, dass ein Verbundbauteil so ausgebildet ist, dass die entsprechenden außen liegenden Oberflächen planparallel zueinander ausgerichtet sind, sollte eine Anordnung von Aktuator und akustischem Detektor auf einer gemeinsamen Achse, die orthogonal zu den äußeren Oberflächen ausgerichtet ist, bevorzugt werden.

Bei dem erfindungsgemäßen Verfahren wird dann so vorgegangen, dass zu einem bestimmten Zeitpunkt mittels des Aktuators Ultraschallwellen in das Verbundbauteil eingekoppelt werden und mit Hilfe des jeweiligen diesem Aktuator zugeordneten akustischen Detektor die jeweilige Zeit bestimmt wird, bis zu der ein vorgebbarer Schwellwert des Betrages der detektierter Ultraschallwellen-Messsignale erreicht bzw. überschritten wird.

In einer weiteren Alternative, die allein oder zusätzlich durchgeführt werden kann, besteht aber auch die Möglichkeit nach dem Beginn der Einkopplung von Ultraschallwellen in das Verbundbauteil zu einem nachfolgenden vorgebbaren Zeitpunkt den bis dahin erreichten maximalen absoluten Betrag des detektierten Ultraschallwellen-Messsignals auszuwerten.

Im erstgenannten Fall ist dann die jeweilige Zeit ein auch für die Fehlerdiagnose auswertbares Kriterium. Wird beispielsweise nach relativ kurzer Zeit der jeweils vorgegebene Schwellwert erreicht bzw. überschritten, kann dies infolge einer zu geringen Porosität des Schaumkernes der Fall sein.

Bei sehr großen Zeiträumen, bis zum Erreichen des jeweiligen vorgegebenen Schwellwertes kann ein durch zu große Poren oder eine Ablösung der stoffschlüssigen Verbindung aufgetretener Fehler detektiert werden.

Wird nach der zweiten Alternative vorgegangen und ein sehr hoher absoluter Betrag des detektierten Ultraschallwellen-Messsignals zu dem jeweiligen vorgegebenen Zeitpunkt ermittelt, kann eine zu geringe Porosität detektiert werden.

Werden dagegen sehr kleine Messsignale als absolute Beträge zu dem vorgegebenen Zeitpunkt (2. Alternative) detektiert, sind innerhalb der Schaumstruktur zu große Poren ausgebildet oder es ist zu einer Ablösung der stoffschlüssigen Verbindung zwischen Element und Schaumkern gekommen.

Es sollten Ultraschallwellen mit vorgegebener definierter Frequenz bzw. Frequenzspektren mittels des/der Aktuator(en) eingekoppelt werden. Die Auswahl geeigneter Frequenzen für das jeweilige Verbundbauteil kann unter Berücksichtigung mehrerer Kriterien, wie Verbundbauteildicke im Detektionsbereich, der Werkstoffe von Elementen und Schaumkern sowie der jeweils gewünschten Porosität des Schaums, erfolgen. An einem Verbundbauteil mit über die zu detektierende Fläche zumindest annähernd homogenen Verhältnissen sollte mit konstanter Frequenz von Ultraschallwellen gearbeitet werden.

Ultraschallwellen können bevorzugt pulsförmig eingekoppelt werden.

Es hat sich herausgestellt, dass es besonders vorteilhaft ist, Ultraschallwellen bei der erfindungsgemäßen Lösung einzusetzen, deren Frequenz deutlich geringer, als bei herkömmlichen Lösungen, bei denen Ultraschallwellen für die zerstörungsfreie Werkstoffprüfung eingesetzt werden, ist. So sollte möglichst bei Frequenzen unterhalb 750 kHz, bevorzugt unterhalb 500 kHz und auch darunter gearbeitet werden.

Die Detektion kann über eine gesamte Fläche eines Verbundbauteiles, aber auch über ein oder mehrere Flächenbereich(e) durchgeführt werden, wobei eine vorab Auswahl beispielsweise bezüglich besonders kritischer Teile von Verbundbauteilen getroffen werden kann.

Erfindungsgemäß wird eine ortsaufgelöste Detektion durchgeführt, wobei den jeweiligen Ultraschallwellen-Messsignalen die entsprechenden zweidimensionalen Ortskoordinaten zugeordnet werden. Ein solches Vorgehen bietet sich zum einen für den Nachweis einer Qualitätssicherung an. Es besteht aber auch zum anderen die Möglichkeit, fehlerbehaftete Teile von Verbundbauteilen nach deren Erkennung durch ein Trennverfahren zu entfernen, so dass zumindest ein fehlerfreier Teil für eine nachfolgende Weiterverarbeitung genutzt und die Ausschussquote gesenkt werden kann.

Für eine Verkürzung der für eine Fehlerdiagnose erforderlichen Zeit besteht die Möglichkeit, mehrere Paare von Aktuatoren und akustischen Detektoren, die jeweils einander zugeordnet sind, einzusetzen. Diese können dann beispielsweise in einer ein- oder mehrreihigen Anordnung eingesetzt werden, wobei die jeweiligen Abstände zueinander so gewählt werden sollten, dass eine gegenseitige Beeinflussung vermieden werden kann. Hierzu kann aber auch allein oder zusätzlich ein sequentieller Betrieb der entsprechenden zueinander zugeordneten Paare von Aktuatoren und Detektoren erfolgen. In diesem Fall sind unmittelbar zueinander benachbarte Paare von Aktuatoren und akustischen Detektoren so betreibbar, dass eines dieser Paare in Pausenzeiträumen des jeweils benachbarten Paares aktiv ist.

In einer weiteren vorteilhaften Ausgestaltung sollten die jeweiligen Aktuatoren und auch die akustischen Detektoren auf die jeweiligen Oberflächen der Elemente angepresst sein, um eine effektive Ein- und Auskopplung der jeweiligen Ultraschallwellen zu erreichen. Hierbei werden die Aktuatoren und Detektoren mit einer entsprechenden vorgebbaren und konstant gehaltenen Druckkraft beaufschlagt. Dies kann beispielsweise durch Federkraft Beaufschlagung oder hydraulisch bzw. pneumatisch erreicht werden.

Die eingesetzten Aktuatoren und auch die akustischen Detektoren sollten in ihrer Gestaltung, Konstruktion sowie dem Werkstoff der eigentlichen Oberflächen, über die Ultraschallwellen eingekoppelt bzw. detektiert werden, an die entsprechende Oberfläche des jeweiligen Verbundbauteils angepasst sein. So besteht die Möglichkeit, mit einer spitzenförmigen Ankoppelfläche von Aktuatoren zu arbeiten.

Alternativ kann aber auch eine Einkopplung von Ultraschallwellen mittels eines von einem Aktuator auf die entsprechende Verbundbauteiloberfläche gerichteten Fluidstrahls(z.B. ein Wasserstrahl) vorzunehmen.

Die Detektion an Verbundbauteilen kann auch über ein vorgegebenes Raster durchgeführt werden, so dass Messungen an bestimmten vorgegebenen Positionskoordinaten durchgeführt werden. Die jeweiligen Rastermaße können dabei konstant gehalten sein und die jeweiligen Abstände von einzelnen Messpunkten sind in diesem Falle jeweils konstant.

Dies ist aber nicht generell erforderlich und in bestimmten Fällen können auch Messungen mit unterschiedlichen Rastermaßen an einem Verbundbauteil durchgeführt werden. So kann beispielsweise in bestimmten kritischen Bereichen eines Verbundbauteiles in einem kleinen Rastermaß detektiert werden, wohingegen andere Bereiche mit erhöhtem Rastermaß detektiert werden. Eine Rastermaßvariation kann aber auch unter Berücksichtigung unterschiedlicher Dicken von Verbundbauteilen in Erwägung gezogen werden.

Eine Verkleinerung bzw. Vergrößerung des eingesetzten Rastermaßes kann aber auch unter Berücksichtigung einer vorab am jeweiligen oder anderen vorab detektierten Verbundteil(en) erkannten Fehlerquote vorgenommen werden, so dass bei vorab weitestgehend fehlerfrei diagnostizierten Bereichen bzw. Verbundbauteilen mit größeren Rastermaßen gearbeitet werden könnte.

Bei der erfindungsgemäßen Lösung besteht aber auch die Möglichkeit, die einzelnen an Messpunkten ortsaufgelöst erfassten Ultraschallwellen-Messsignale bzw. die entsprechenden Zeiten, gemäß einer erfindungsgemäßen Alternative einer Klassifizierung zu unterziehen. Dementsprechend erfolgt eine jeweilige Zuordnung in einzelne Klassen, die Bereiche gemessener Zeiten bzw. absoluter Beträge zu vorgegebenen Zeitpunkten repräsentieren, so dass über die entsprechenden Häufigkeiten in einzelnen Klassen Aussagen über die jeweilige Herstellungsqualität des jeweiligen Verbundbauteiles getroffen werden können.

Da mit dem erfindungsgemäßen Verfahren eigentlich sämtliche möglichen Fehler detektiert werden können, aber eine Trennung der Fehlerarten zu große Poren und Ablösungen der stoffschlüssigen Verbindung von Schaumkern zu einem mit diesem stoffschlüssig verbundenen Element nicht trennen lassen, aber die letztgenannte Fehlerart röntgendiagnostisch nicht detektiert werden kann, besteht die Möglichkeit, die Qualität der zerstörungsfreien Fehlerdiagnose durch die Kombination des erfindungsgemäßen Verfahrens mit einer röntgentomographischen Untersuchung zu verbessern.

Werden nämlich bei der röntgentomographischen Untersuchung in einem Bereich eines Verbundbauteiles kein Fehler detektiert, der mit Ultraschallwellen vorab detektiert worden ist, so handelt es sich zweifelsfrei um eine solche unerwünschte Ablösung und nicht um zu große Poren.

Nachfolgend soll die Erfindung beispielhaft näher erläutert werden.

Dabei zeigen:

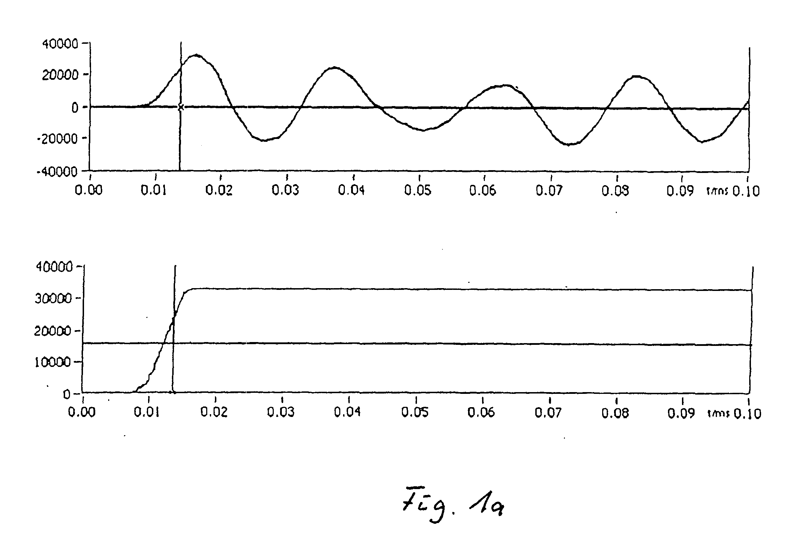

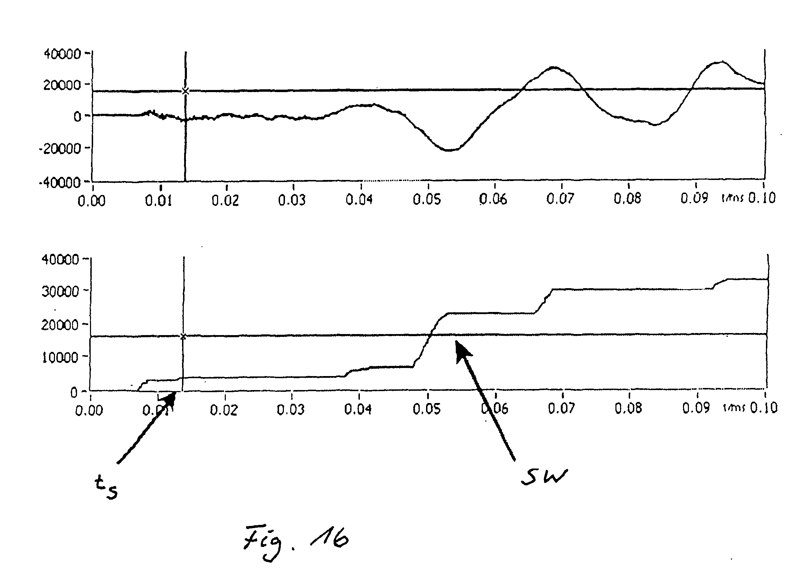

- Figur 1a und 1b: jeweils zwei Diagramme, von an einem Ver- bundbauteil detektierten Ultraschallwellen- Messsignalen bei einer fehlerfreien und ei- ner fehlerbehafteten Messung.

Für die Untersuchungen wurde ein Ultraschallwellen-Messgerät USIP11, der Firma Krautkrämer, Deutschland mit einem Piezo-Schallgeber (KS-S8-1.1) und ein akustischer Detektor mit einer internen Signalverstärkung von 40 dB eingesetzt. Bei den jeweiligen Messungen wurden mit einem Abstand von jeweils 18 ms Spannungsimpulse mit einer Spitzenspannung von ca. 800 V eingesetzt. Es wurden mehrere Messungen durchgeführt, um niederfrequente Störungen zu unterdrücken. Die Messungen wurden an einem plattenförmigen Verbundbauelement, das zwei planparallele Oberflächen aufwies und eine Dicke von insgesamt ca. 11 mm erreichte, durchgeführt. Ein Aluminiumschaumkörper wurde dabei von jeweils zwei 1 mm starken Stahlblechen beidseitig eingefasst, die stoffschlüssig mit dem Aluminiumschaumkern verbunden waren.

Die beiden in Figur 1a dargestellten Diagramme zeigen Ultraschallwellen-Messsignalverläufe, die keinen Fehler an einem solchen Verbundbauteil, repräsentieren, wohingegen die beiden in Figur 1b dargestellten Diagramme die Diagnose eines Fehlers wiedergeben.

In den beiden oberen Diagrammen sind die kontinuierlich ermittelten Ultraschallwellen-Messsignalverläufe über die Zeit dargestellt. Es wird deutlich, dass bei einer Messung an einem Messpunkt ohne Fehler ein vorgegebener Schwellwert eines erfassten Ultraschallwellen-Messsignals nach deutlich kürzerer Zeit detektiert werden kann, als dies an einem fehlerbehafteten Messpunkt, wie im oben dargestellten Diagramm von Figur 1b deutlich wird. So wurde ein vorgegebener Schwellwert SW (hier 1800) bei einer Messung mit einem Fehler erst nach 50 µs und ohne Fehler bereits nach 11 µs erreicht.

Die beiden unteren Diagramme der Figuren 1a und 1b spiegeln die zweite erfindungsgemäße alternative Möglichkeit wieder und stellen eine Signalverarbeitungsstufe dar. So wurde ausgehend vom Beginn einer Einkopplung von Ultraschallwellen in das entsprechende Verbundbauteil bei diesem Beispiel nach Ablauf einer Zeit tₛ von 0,013 ms der jeweils maximale Wert des absoluten Betrages des bis zu diesem Zeitpunkt gemessenen Ultraschallwellen-Messsignals für die Auswertung und Fehlerdiagnose herangezogen. Es wird deutlich, dass an einem Messpunkt ohne Fehler, der zu diesem vorgegebenen Zeitpunkt ermittelte Ultraschallwellen-Messsignalwert deutlich größer, als bei einer Messung an einem Punkt mit einem Fehler ist.

Die Messungen wurden mit einer Frequenz von 50 kHz durchgeführt.

Das erfindungsgemäße Verfahren kann aber auch an anders gestalteten Verbundbauteilen durchgeführt werden, die nicht zwingend jeweils planparallel zueinander ausgerichtete Oberflächen von stoffschlüssig mit einem Schaumkern verbundenen Elementen aufweisen müssen. So können Wölbungen und Oberflächenkonturen an Verbundbauteilen in gewissen Grenzen toleriert werden, ohne dass die zerstörungsfreie Fehlerdiagnose erheblich behindert wird.

## Patentansprüche

1. Verfahren zur zerstörungsfreien Fehlerdiagnose an Verbundbauteilen mit einem Kern aus einem Metall- oder Keramikschaum,
wobei der Kern an mindestens zwei gegenüberliegenden Seiten mit Elementen aus einem homogenen Werkstoff konstanter Schallgeschwindigkeit eingefasst ist,
dabei mit mindestens einem auf eine äußere Oberfläche eines der Elemente aufgesetzten Aktuator Ultraschallwellen mit vorgebbarer Frequenz in das Verbundbauteil eingekoppelt und mit einem in einem vorgebbaren Abstand zum Aktuator auf der gegenüberliegenden Seite des Kernes angeordneten auf einer äußeren Oberfläche des jeweils anderen Elementes aufgesetzten akustischen Detektors Ultraschallwellen-Messsignale detektiert werden; dabei
die jeweilige Zeit bestimmt wird, bis zu der ein vorgebbarer Schwellwert detektierter Ultraschallwellen-Messsignale überschritten und/oder
der maximale Wert des absoluten Betrages des detektierten Ultraschallwellen-Messsignals in einem Zeitintervall zwischen dem Beginn der Einkopplung von Ultraschallwellen und einem vorgebbaren Zeitpunkt bestimmt und für die Fehlerdiagnose benutzt wird; wobei die Bestimmung ortsaufgelöst durchgeführt und dabei die zweidimensionalen Ortskoordinaten jeweiligen Ultraschallwellen-Messsignalen und/oder Zeiten zugeordnet werden.

2. Verfahren nach Anspruch 1,
**dadurch gekennzeichnet, dass** über eine gesamte Fläche oder einen bzw. mehrere Flächenbereich(e) Messungen durchgeführt werden.

3. Verfahren nach einem der vorhergehenden Ansprüche, **dadurch gekennzeichnet, dass** mehrere Paare von Aktuatoren und akustischen Detektoren sequentiell betrieben werden.

4. Verfahren nach einem der vorhergehenden Ansprüche, **dadurch gekennzeichnet, dass** Aktuatoren und Detektoren mit vorgebbarer Druckkraft gegen die jeweiligen Oberflächen von Elementen beaufschlagt werden.

5. Verfahren nach einem der vorhergehenden Ansprüche, **dadurch gekennzeichnet, dass** die Bestimmungen in einem vorgebbaren Raster durchgeführt werden.

6. Verfahren nach einem der vorhergehenden Ansprüche, **dadurch gekennzeichnet, dass** die Bestimmung mit variablen Rastermaßen durchgeführt wird.

7. Verfahren nach einem der vorhergehenden Ansprüche, **dadurch gekennzeichnet, dass** ortsaufgelöste Ultraschallwellen-Messsignale und/oder Zeiten einer Klassifizierung unterzogen werden.

8. Verfahren nach einem der vorhergehenden Ansprüche, **dadurch gekennzeichnet, dass** mit den Aktuatoren Ultraschallwellen mit vorgebbarer Frequenz/Frequenzspektrum in das Verbundbauteil eingekoppelt werden.

9. Verfahren nach einem der vorhergehenden Ansprüche, **dadurch gekennzeichnet, dass** Ultraschallwellen mit Frequenzen unterhalb 750 kHz eingesetzt werden.

10. Verfahren nach einem der vorhergehenden Ansprüche, **dadurch gekennzeichnet, dass** zusätzlich eine röntgentomographische Untersuchung durchgeführt wird.

11. Verfahren nach einem der vorhergehenden Ansprüche, **dadurch gekennzeichnet, dass** Ultraschallwellen über eine Spitze eines Aktuators oder mittels eines Fluidstrahls eingekoppelt werden.

## Claims

1. Method for the non-destructive flaw diagnosis in composite components with a metallic or ceramic foam core,
where the core is enclosed on at least two opposite sides by elements made of a homogeneous material of constant sound velocity,
ultrasonic waves with a predeterminable frequency being injected into the composite component by at least one actuator placed on an outer surface of one of the elements, and ultrasonic-wave measurement signals being detected by an acoustic detector arranged at a predeterminable distance from the actuator on the opposite side of the core and placed on an outer surface of the respectively other element;
the respective time until a predeterminable threshold value of detected ultrasonic-wave measurement signals is exceeded being determined and/or
the maximum value of the absolute value of the detected ultrasonic-wave measurement signal in a time interval between the beginning of the injection of ultrasonic waves and a predeterminable point of time being determined and used for the flaw diagnosis; the determination being carried out in a positionally resolved manner and the two-dimensional position coordinates being assigned to respective ultrasonic-wave measurement signals and/or times.

2. Method according to Claim 1,
**characterised in that** measurements are carried out over an entire surface or one or more surface region(s).

3. Method according to one of the preceding claims, **characterised in that** a plurality of pairs of actuators and acoustic detectors are sequentially operated.

4. Method according to one of the preceding claims, **characterised in that** actuators and detectors are pressed with a predeterminable pressing force against the respective surfaces of elements.

5. Method according to one of the preceding claims, **characterised in that** the determinations are carried out in a predeterminable grid.

6. Method according to one of the preceding claims, **characterised in that** the determination is carried out with variable grid spacings.

7. Method according to one of the preceding claims, **characterised in that** positionally resolved ultrasonic-wave measurement signals and/or times undergo classification.

8. Method according to one of the preceding claims, **characterised in that** ultrasonic waves with a predeterminable frequency/frequency spectrum are injected into the composite component by the actuators.

9. Method according to one of the preceding claims, **characterised in that** ultrasonic waves with frequencies below 750 kHz are used.

10. Method according to one of the preceding claims, **characterised in that** an X-ray tomographic investigation is additionally carried out.

11. Method according to one of the preceding claims, **characterised in that** ultrasonic waves are injected via a tip of an actuator or by means of a fluid jet.

## Revendications

1. Procédé de diagnostic non destructif de défauts dans des pièces composites ayant un noyau constitué d'une mousse métallique ou céramique,
dans lequel le noyau est enserré sur au moins deux côtés opposés par des éléments formés d'un matériau homogène à vitesse acoustique constante,
dans lequel, avec au moins un dispositif d'actionnement appliqué sur une surface externe d'un des éléments, des ondes ultrasonores de fréquence prédéterminable sont injectées dans la pièce composite et des signaux de mesure d'ondes ultrasonores sont détectés par un détecteur acoustique agencé à distance prédéterminable du dispositif d'actionnement sur le côté opposé du noyau et appliqué sur une surface externe de l'autre élément respectif ;
dans lequel on détermine le temps respectif qui s'écoule jusqu'à ce que la valeur de seuil prédéterminable de signaux de mesure d'ondes ultrasonores détectées soit dépassée et/ou que la valeur maximale du niveau absolu du signal de mesure d'ondes ultrasonores détectées dans un intervalle de temps entre le début de l'injection d'ondes ultrasonores et un moment prédéterminable soit déterminée et on l'utilise pour le diagnostic de fautes ;
dans lequel la détermination est effectuée par résolution locale, et
dans lequel les coordonnées locales dimensionnelles sont affectées à des signaux de mesure d'ondes ultrasonores respectives et/ou des temps respectifs.

2. Procédé selon la revendication 1,
**caractérisé en ce que** des mesures sont réalisées sur une surface totale ou sur une ou plusieurs sections de surface.

3. Procédé selon l'une quelconque des revendications précédentes, **caractérisé en ce que** plusieurs paires de dispositifs d'actionnement et de détecteurs acoustiques sont exploités en séquence.

4. Procédé selon l'une quelconque des revendications précédentes, **caractérisé en ce que** les dispositifs d'actionnement et les détecteurs sont pressés avec une force de pression prédéterminable contre les surfaces respectives d'éléments.

5. Procédé selon l'une quelconque des revendications précédentes, **caractérisé en ce que** les déterminations sont réalisées dans une trame prédéterminable.

6. Procédé selon l'une quelconque des revendications précédentes, **caractérisé en ce que** la détermination est réalisée avec des dimensions de trame variables.

7. Procédé selon l'une quelconque des revendications précédentes, **caractérisé en ce que** les signaux de mesure d'ondes ultrasonores localement résolus et/ou les temps sont soumis à une classification.

8. Procédé selon l'une quelconque des revendications précédentes, **caractérisé en ce que**, avec les dispositifs d'actionnement, des ondes ultrasonores de fréquence ou de spectre de fréquence prédéterminable sont injectées dans la pièce composite.

9. Procédé selon l'une quelconque des revendications précédentes, **caractérisé en ce que** des ondes ultrasonores de fréquences inférieures à 750 kHz sont injectées.

10. Procédé selon l'une quelconque des revendications précédentes, **caractérisé en ce que** l'on effectue en plus une analyse tomographique aux rayons X.

11. Procédé selon l'une quelconque des revendications précédentes, **caractérisé en ce que** des ondes ultrasonores sont injectées via une pointe d'un dispositif d'actionnement ou au moyen d'un flux de fluide.
